# DEMANDE DE BREVET EUROPEEN

(11) **EP 3 501 342 A1**
(43) Date de publication de la demande: **26.06.2019**
(21) Numéro de dépôt: 18211363.9
(22) Date de dépôt: 10.12.2018
(51) Int. Cl.: A47B 96/20, A47F 3/04, A47F 11/10, E06B 3/663, B32B 17/06, F21S 4/20, F21V 33/00, F25D 25/02

(54) **PANNEAU VITRE LUMINEUX ET PAROI L'INTEGRANT**

(30) Priorité: 11.12.2017 FR 1761939
(71) Demandeur: Saint-Gobain Glass France, 92400 Courbevoie (FR)
(72) Inventeur: CRAVERO, Louis, 60200 COMPIEGNE (FR); BARLET, Marina, 60200 COMPIEGNE (FR)
(74) Mandataire: Saint-Gobain Recherche

(57) **Abrégé**

L'invention concerne un panneau vitré lumineux à diodes électroluminescentes (100) et un meuble l'intégrant.

## Description

L'invention concerne le domaine des panneaux vitrés lumineux et en particulier les panneaux vitrés lumineux à diodes électroluminescentes pour l'aménagement intérieur, en particulier à l'horizontale intégré dans une paroi d'un meuble ou mural (transparent ou opaque).

Il existe déjà des tablettes éclairantes, typiquement sous forme de panneaux vitrés rectangulaires comportant :
- une feuille transparente de verre, avec deux faces principales, et une tranche,
- sur une carte à circuit imprimé (PCB en anglais pour 'printed circuit card') des diodes électroluminescentes couplées optiquement à la tranche de la première feuille de verre formant guide de lumière, le support et les diodes étant dans un profilé en U lié à la feuille
- des moyens d'extraction de la lumière guidée sous forme d'une couche diffusante sur l'une des faces principales.

La lumière est visible sur les deux faces de la tablette.

L'état de la technique ne permet pas de choisir à façon les motifs lumineux.

L'invention a pour but de proposer un panneau vitré lumineux à diodes électroluminescentes qui résout le problème technique précité en élargissant la gamme possible des motifs lumineux, en particulier sans générer de difficultés de mise en oeuvre ni sacrifier la durabilité.

A cet effet, l'invention propose un panneau vitré lumineux pour aménagement intérieur, notamment pour mobilier, en particulier une étagère (de meuble, murale) ou un plan (de table etc) de préférence horizontale, comportant :
- une première feuille transparente, en plastique (poly-méthacrylate de méthyle PMMA par exemple) ou verre, notamment rectangulaire, notamment neutre en couleur, en particulier plastique ou verre clair ou extraclair (pour absorber le moins possible de lumière guidée), notamment souple ou de préférence rigide ou au moins avec une tenue mécanique suffisante (pour l'assemblage ou porter de objets si nécessaire), par exemple plane, de préférence d'épaisseur E1 au moins millimétrique, même d'au moins 3mm (pour favoriser le guidage, notamment suffisamment épaisse pour porter des objets si nécessaire)) et d'au plus 10mm (pour plus de compacité), avec deux faces principales respectivement dites face F1 et face F2, et une première tranche,
- un ensemble de diodes électroluminescentes inorganiques -sur un support de diodes-, diodes couplées optiquement à la première feuille en particulier à une portion dite de couplage de la première tranche, support de diodes qui est par exemple une carte à circuit électronique porteuse sur une face principale dite avant des diodes, la première feuille formant ainsi guide de lumière, les diodes ayant une émission principale dans le visible et/ou l'ultraviolet dit UV
- des moyens d'extraction de lumière, aptes à extraire la lumière guidée dans la première feuille, éventuellement amovibles, lorsque la lumière extraite est Uv, des moyens de conversion en lumière visible, par exemple une couche de luminophore (apte à extraire et convertir de préférence), notamment comportant sur la première feuille transparente une texture diffusante (sablage, attaque acide etc) ou une couche diffusante (liant avec des particules diffusantes etc) ou comportant dans la première feuille des marquages (gravure par laser notamment) ou une région diffusante (incorporation de particules diffusantes etc), définissant une première zone d'extraction notamment avec un contour donné C1 éventuellement une ou plusieurs deuxièmes zones d'extractions chacune avec un contour Ci donné, (avec la même technique texture ou couche diffusante)
- une deuxième feuille, par exemple plane (parallèle à la première feuille), notamment rectangulaire (de forme identique à la première feuille et même de taille identique ou similaire), notamment souple ou de préférence rigide ou au moins avec une tenue mécanique suffisante (pour l'assemblage ou pour porter des objets si nécessaire), de préférence d'épaisseur E2 au moins millimétrique et même d'au moins 3mm (notamment suffisamment épaisse pour porter des objets si nécessaire) et d'au plus 10mm (pour plus de compacité), avec deux faces principales, respectivement dites face F3 et face F4 et une deuxième tranche, les faces F3 et F2 étant les faces internes en regard, les faces F1 et F4 étant les faces (visibles) externes du panneau (chacune ou l'une d'elle au moins libre, nue ou revêtue de couche(s) mais de préférence sans feuille additionnelle couvrante espacée ou collé, elle n'est pas assemblée en vitrage feuilleté.

La deuxième feuille est opaque par exemple en bois, en plastique teinté dans la masse (tout ou partie de l'épaisseur) ou même métallique (aluminium brossée, acier (inox) etc).

La deuxième feuille est alternativement transparente, en verre ou en plastique (poly-méthacrylate de méthyle PMMA par exemple), notamment neutre en couleur en particulier plastique ou verre clair ou extraclair et porteuse d'une couche couvrante de masquage, de préférence un dépôt plutôt qu'un film rapporté et collé, en particulier une couche opaque qui est principalement absorbante et/ou réfléchissante formant miroir côté face F3 ou côté face F4 (avec une RL d'au moins 90%, ou 92% par exemple mesurée côté face F4) sur la face F3 de préférence ou sur la face F4 (dépôt, film opaque et décoratif ou métallisé collant).

En outre, les première et deuxième feuilles forment un ensemble vitré (illuminable) en étant assemblées (notamment sans intercalaire de feuilletage entre F2 et F3) :
a) par un adhésif local collant les faces F2 et F3 (de préférence sans pièce espaceur additionnel) de préférence périphérique et/ou comportant ou constitué d'un ruban notamment double face ou d'une colle (dépôt par voie liquide notamment), notamment de largeur d'au plus 20mm,
et/ou b) par un profilé de maintien sur la périphérie des faces F1 et F4, et en regard des première et deuxième tranches.

Et les faces F2 et F3 sont en discontinuité optique, espacées d'une hauteur H d'au plus 1mm et même d'au plus 0,5mm ou de moins de 0,5mm, éventuellement les faces F2 et F3 étant l'une contre l'autre (avec des points de contacts le plus souvent dans le cas b).

La discontinuité optique permet de ne pas nuire au guidage de la lumière en présence d'une couche couvrante de masquage. Par exemple dans le cas b) les première et deuxième feuilles peuvent l'une contre l'autre (F2 contre F3) cela génère une interface d'air suffisante. Dans le cas a) le collage (sans espaceur en plus de préférence) peut servir à créer une lame d'air d'épaisseur plus grande et contrôlée entre F2 et F3.

L'assemblage selon a) ou b) assure une cohésion mécanique de l'ensemble vitré, un ensemble monobloc, permettant une manipulation aisée de l'ensemble vitré lors de son installation dans sa destination finale, et garantissant une structure pérenne quant à sa rigidité mécanique.

L'assemblage permet aussi de manipuler et renforcer le panneau aisément (pour le nettoyer etc). Il est de conception simple, sans créer de trop surépaisseur (épaisseur de profilé d'au plus 2mm).

La faible hauteur H contribue à la compacité du panneau vitré.

La deuxième feuille peut aussi servir de protection de la couche couvrante de masquage en face interne si en F3 et/ou de la couche diffusante si en face interne F2.

Ainsi, les premières et deuxième feuilles ne forment pas un vitrage feuilleté avec un intercalaire de feuilletage (couvrant sensiblement les faces F2 ou F3) en une matière thermoformable souvent choisie dans le groupe des butyrals de polyvinyle (PVB), des polychlorures de vinyl (PVC) plastifiés, du polyuréthane (PU) ou des éthylènes vinyle acétate (EVA). Et de préférence les faces F1 et F4 sont des faces également qui ne sont pas des faces de feuilletage.

La lumière extraite peut être blanche ou colorée, à façon.

Les applications de l'invention sont multiples et concernent tous les domaines d'application incluant des étagères de type tablette en verre dans l'habitat mais également les secteurs de l'hôtellerie et du tertiaire en général.

On préfère placer le panneau à l'horizontal avec F4 vers le haut.

Le panneau vitré notamment tablette présente deux aspects différents si allumé ou éteint. Lorsqu'il est éteint, la face F4 a un aspect décoratif et même parfois miroir. Lorsqu'il est allumé, il devient éclairant vers le bas en conservant l'aspect décoratif. Les déclinaisons de l'invention peuvent résider aussi cumulativement ou alternativement dans :
- le choix du type de couche diffusante d'extraction l'épaisseur de la couche diffusante d'extraction (variation de l'intensité lumineuse)
- dimensions et épaisseurs des feuilles, en particulier des verres
- types de diodes.

Les motifs d'extraction peuvent être centrés comme décentrés (deux bandes périphériques par exemple). Les zones transparentes peuvent être centrées comme décentrées.

La première feuille peut être éclairée et placée de manière non visible pour l'utilisateur donc coté sol.

Si le panneau est placé en hauteur et a pour but d'éclairer le plafond, il est retournée : la première feuille peut être coté plafond.

Le panneau peut servir dans un équipement réfrigéré, dans une meuble, sur un mur, sur une colonne (totem, présentoir etc), être une tablette, une étagère murale.

La deuxième feuille de verre avec la couche de masquage présente de préférence une transmission lumineuse TL nulle côté F4.

La deuxième feuille peut être un film plastique (ou verre) souple (sur une première feuille de plastique ou verre rigide) mais de préférence est une feuille rigide.

L'adhésif selon a) est réparti pour ne pas gêner significativement le guidage et l'extraction de lumière (on choisit sa localisation et/ou son étendue si dans la zone de guidage).

Pour garder l'aspect brillant du verre, on peut choisir que la couche de masquage soit en face F3. La face F4 de la deuxième feuille de verre peut être nue ou avoir un revêtement fonctionnel par exemple une couche mince ou un empilement de couches minces transparentes et préférence incolore ou neutre en couleur.

Pour avoir un aspect mat, on peut choisir que la couche de masquage soit en face F4 de la deuxième feuille de verre.

Selon a), l'adhésif, ruban double face ou colle peut être de largeur d'au plus 20mm ou 15mm et/ou d'épaisseur d'au plus 0,5mm (fixant la hauteur H notamment en l'absence d'une pièce espaceur additionnelle) et même en retrait d'au plus 30mm ou affleurant avec les première ou deuxième tranches.

L'adhésif (local) notamment en bande peut être :
- sur au moins deux bordures périphériques opposées, en bande (ruban double face, ligne de colle) continue ou discontinue (réseau de points de colle etc), notamment en excluant sur une bordure périphérique entre les diodes (la tranche de couplage optique) et la première zone d"extraction ou en limitant la largeur au moins dans cette bordure à au plus 15mm
- sur au moins trois bordures périphériques, notamment en excluant sur une bordure périphérique entre les diodes (la tranche de couplage optique) et la première zone d"extraction ou en limitant la largeur au moins dans cette bordure à au plus 15mm
- sur les quatre bordures périphériques
- en bande (centrale) croisée (continue ou discontinue).

L'adhésif est de préférence transparent et/ou masqué côté face F4 par ladite couche de masquage.

On préfère que l'adhésif ou la colle soit transparente pour des raisons esthétiques. Par exemple il s'agit d'une bande adhésive double face avec un support polymérique transparent comme le polyester avec en double face de la colle transparente par exemple acrylique.

Pour la dissipation thermique selon b) le profilé de maintien peut loger les diodes et le support de diodes, notamment le support de diodes est collé par une colle thermique au profilé de maintien qui est métallique (aluminium, acier laqué etc) ou sur une bande métallique additionnelle sur le profilé de maintien notamment polymérique (polychlorure de vinyle PVC) ou encore bois etc.

Le profilé de maintien peut être d'épaisseur d'au plus 2 ou 1mm ou même d'au plus 0,5mm.

Selon b) le profilé de maintien peut loger les diodes et le support de diodes, notamment le support de diodes est collé par une colle thermique au profilé de maintien qui est métallique ou sur une bande métallique additionnelle sur le profilé de maintien notamment polymérique (pour la dissipation thermique).
En particulier le profilé de maintien en une ou plusieurs pièces aboutées forme un cadre de maintien (par exemple quatre pièces avec bord en biseau.

Dans une réalisation, pour la dissipation thermique, le support de diodes est collé par une colle thermique à une partie métallique (notamment aluminium, par exemple épaisseur d'au plus 1mm ou même d'au plus 0,5mm) d'une pièce (qui est un profilé métallique en L ou U par exemple) ou un profilé polymérique (polyuréthane PU, etc, un extrudat, pièce injectée) avec une bande métallique additionnelle (notamment aluminium, par exemple épaisseur d'au plus 1mm ou même 0,5mm 0,5mm), la pièce est chaussée ou fixée à la première feuille et/ou la deuxième feuille (par la tranche et/ou en périphérie les faces F1 et F4), notamment forme ledit profilé de maintien selon b) ou est dissociée (pas de liaison) de l'ensemble vitré , en particulier fixée ou apte à être fixée à une partie de structure de meuble

On préfère que le profilé ne s'intercale pas entre les faces F2 et F3.
Le support de diodes PCB peut être un composite de résine (époxy) renforcé de fibres de verre (souvent dit FR-4), ou être métallique (aluminium, cuivre, etc). Il est de préférence d'épaisseur millimétrique (moins de 10mm de préférence) ou même d'au plus 1mm.

Pour des raisons de poids ou d'encombrement de préférence E1 + E2 est d'au plus 8mm.

La couche de masquage peut être sur la face F4 ou de préférence sur la face F3 et sous forme d'aplat et être une couche opaque (noire, ou même colorée de couleur sombre ou vive) en particulier minérale notamment un émail noir ou même coloré de couleur sombre ou vive (et la deuxième feuille est en verre). De préférence la densité optique est d'au moins 2 et même d'au moins 2,5.

La couleur est définie de manière connue par les paramètres L*, a* et b* et est mesurée par un spectrocolorimètre. On préfère une couche, notamment un émail, présentant une clarté L* de moins de 20 et même d'au plus 10 ou 5 et même avec en valeur absolue a*<20 ou a*<10 et/ou b*< 20 ou b*< 10. En particulier on préfère L*=0 et même a*= b*=0.

En particulier, le panneau comprend sur la face F3 une couche opaque diffusante de préférence blanche, ayant une face libre vers la face F2. Si la couche de masquage est sur la face F3, la couche diffusante peut être directement dessus.

On peut choisir une couche couvrante de masquage, notamment un émail, présentant une clarté L* de moins de 20 et même d'au plus 10 ou 5 et même avec en valeur absolue a*<20 ou a*<10 et/ou b*< 20 ou b*< 10. En particulier on préfère L*=0 et même a*= b*=0.. On peut choisir un émail noir ou coloré, à des fins décorative côté F4, de couleur sombre ou vive) et ici recouvert d'un émail blanc (ou d'une peinture blanche) /ou avec une clarté L* d'au moins 50 ou même d'au moins 80 et la deuxième feuille est en verre.

Cette couche diffusante blanche permet de recycler la lumière significativement. Il y a plus de lumière côté face F1.

La couche couvrante de masquage sous forme d'aplat, peut être sur la face F3 ou même F4 en particulier est une couche opaque diffusante notamment blanche et/ou avec une clarté L d'au moins 50.

En particulier c'est une couche opaque diffusante minérale blanche notamment un émail blanc (et la deuxième feuille est en verre) ou une peinture ou laque blanche, sous forme d'aplat de préférence. On peut choisir un produit planilaque blanc de la société demanderesse, par exemple composé à plus de 95% de TiO2.

La laque après séchage comprend les ingrédients suivants :
- un liant sous forme de résine polyuréthane obtenue par réticulation, par un isocyanate non aromatique, de résines acryliques hydroxylées issues de la polymérisation d'un styrène acrylique
- des matières minérales (pigments et charges) à hauteur de 55% en masse.

Cette laque est obtenue par dépôt au rideau, suivi d'un séchage pendant une durée de 5 minutes.

Si la couche de masquage diffusante est colorée on préfère une lumière extraite de couleur identique ou similaire de préférence.

Dans une réalisation, la couche couvrante de masquage est sur la F4, sous forme d'aplat, et est une couche réfléchissante formant un miroir côté face F3.En particulier c'est couche à l'argent avec de préférence une surcouche décorative opaque couvrant et (directement ou sur une couche de protection du miroir telle une peinture ou laque classique) sur la couche couvrante de masquage réfléchissante.

Dans une réalisation, la couche couvrante de masquage est sur la face F3, sous forme d'aplat, et est une couche réfléchissante formant un miroir côté face F4, en particulier couche à l'argent en face F3 avec de préférence en face F3 une surcouche opaque diffusante blanche et/ou avec une clarté L* d'au moins 50) couvrant et (directement ou sur une couche de protection du miroir telle une peinture, laque classique) sur la couche couvrante de masquage la couche opaque diffusante ayant une face libre vers la face F2.

Cette couche diffusante permet de recycler la lumière significativement. Il y a plus de lumière côté face F1.

La couche diffusante opaque pour le recyclage de la lumière extraite peut se présenter sous la forme d'une couche organique en particulier une encre ou une couche minérale en participer un email. Cette encre ou cet émail est par exemple sérigraphié ou imprimé sur la deuxième feuille qui est en verre.

Dans une réalisation, la texture diffusante ou la couche diffusante d'extraction est sur la face F2 ce qui permet d'atteindre un plus grand éclairement côté face F1 et protège la couche (produits de nettoyage etc).

La couche diffusante peut être un aplat ou comporte un réseau de motifs diffusants en couche formant le contour C1.

En particulier la couche diffusante est de préférence en face F2 et, dans la première zone d'extraction, la couche diffusante est d'épaisseur E1, notamment un aplat ou avec un réseau de motifs diffusants avec un taux de couverture T1, et dans la deuxième zone d'extraction la couche diffusante est d'épaisseur E'1, notamment un aplat ou avec un réseau de motifs diffusants avec un taux de couverture T'1.
Pour faire varier la lumière sortant coté F1, E1 et E'1 sont différents, en particulier E'1>1,5E1 et même E'1≥2 E1 ou E1>1,5 E'1 et même E1≥2 E'1.
Par exemple E1 - E'1 en valeur absolue est supérieure ou égale à 5 ou 8 µm.
De préférence l'épaisseur ne dépasse pas 40µm ou même 30µm.

On peut cumulativement ou alternativement faire varier les taux de couverture de motifs ponctuels.

En particulier on peut choisir un émail diffusant sur une première feuille en verre. La première feuille est en verre de préférence clair ou extraclair et/ou la deuxième feuille est en verre ou plastique

Le panneau peut former une tablette, une étagère, un plan de travail, un plan d'une table, une tablette de réfrigérateur.

On préfère côté face F1 : une luminance normale de préférence d'au moins 50cd/m² et même inférieure à 3000 cd/m², encore plus préférentiellement inférieure ou égale à 2000 cd/m² et/ou un flux d'au moins 200 lux à 20 cm.

De préférence l'ensemble vitré illuminable est fourni avec des diodes sur le support de diodes dans le profilé de maintien lié à l'ensemble vitré, ou en kit avec les diodes sur le support de diodes ou est fourni séparément pour une utilisation dans un meuble ou une paroi verticale (mur, cloison etc) porteur des diodes sur le support de diodes.

L'invention concerne aussi une paroi de meuble (bois, plastique) ou murale apte à intégrer le panneau vitré lumineux à diodes électroluminescentes déjà décrit.

La paroi de meuble ou murale peut comporter un retrait (dans une partie latérale ou de préférence de fond du meuble) pour loger le support de diodes, les diodes notamment sur une bande métallique (alu etc) fixée sur la paroi et même de préférence pour loger une portion du panneau incluant la première tranche notamment de couplage.

Le retrait peut être d'au moins 5 ou 8mm pour supprimer les points chauds.

L'invention concerne également le meuble avec ladite paroi.

Dans une réalisation, le panneau comprend une couche partiellement réfléchissante couvrant et sur la face F4. L'ensemble deuxième feuille avec ladite couche partiellement réfléchissante et la couche de masquage possède une réflexion lumineuse externe coté F4 d'au moins 60%, de préférence d'au moins 80%, la transmission lumineuse externe coté F4 étant nulle.

Et la couche de masquage sur la face F3 et une couche opaque en particulier noire, colorée (de préférence foncée, couleur sombre voire couleur vive) distincte d'une couche miroir notamment un émail.

La couche de masquage peut présenter une clarté L* de moins de 20 et même d'au plus 10 ou 5 et même avec en valeur absolue a*<20 ou a*<10 et/ou b*< 20 ou b*< 10. En particulier on préfère L*=0 et même a*= b*=0.

La couche partiellement réfléchissante permet avantageusement d'obtenir un aspect miroir lorsque les diodes sont éteintes.

La couche partiellement réfléchissante en particulier est un empilement de couches minces déposées par pulvérisation cathodique magnétron en particulier :
- éventuellement sous couche base de nitrure ou d'oxynitrure ou de carbonitrure de silicium, ou à base de nitrure ou d'oxynitrure ou de carbonitrure d'aluminium et/ou de zirconium ou d'un mélange d'au moins deux de ces composés (nitrures ou oxynitrures ou carbonitrures mixtes Si-AI ou Si-Zr) notamment d'épaisseur de 5 à 70nm, notamment de 10 à 35 nm,
- couche fonctionnelle à base d'un métal partiellement ou entièrement oxydé, ledit métal appartenant au groupe du titane, du zirconium notamment d'épaisseur de 5 à 50nm
- éventuellement surcouche en matériau diélectrique transparent, notamment choisi parmi le nitrure de silicium et/ou d'aluminium, l'oxynitrure de silicium et/ou d'aluminium et l'oxyde de silicium notamment d'épaisseur de 1 à 10 nm , notamment de 2 à7 nm.

On peut combiner les types de moyens d'extractions. Il est ainsi possible d'avoir une encre et un marquage sous forme de texturations.

On préfère comme moyens d'extraction une couche diffusante sur la face F2 ou F3 à une région diffusante, pour plus de souplesse dans le choix de la ou les régions d'extractions. Comme plastique avec région diffusante on peut citer le produit ACRYLITE® LED light guiding edge lit (EndLighten) d'EVONIK.

La couche diffusante d'extraction peut se présenter sous la forme d'une couche organique en particulier une encre ou une couche minérale en participer un email. Cette encre ou cet émail est par exemple sérigraphiés ou imprimé sur le premier verre selon une forme souhaité.

Par exemple, l'encre est une encre ultraviolet (UV). Une encre du type organique est une encre qui diffuse le faisceau lumineux guidé. Une encre UV est une encre composée d'une multitude de particules, chacune réagissant différemment. En effet, les particules réagissent toutes à la longueur d'onde de la lumière UV (405nm) issu des diodes mais la réaction est différente. En effet, ces particules, soumises à l'excitation d'une lumière UV, vont générer elles-mêmes des photons c'est-à-dire un flux lumineux. La longueur d'onde de ce flux est variable selon les particules utilisées. Ainsi, en mélangeant les particules selon un dosage particulier, il est possible d'obtenir une multitude de couleur.

Selon une caractéristique, la couche diffusante d'extraction est un émail blanc en présentant une clarté L* d'au moins 50. La couleur de l'émail définie de manière connue par les paramètres L*, a* et b* est mesurée par un spectrocolorimètre.

Selon une caractéristique, l'émail présente la composition suivante :
- entre 20 et 60 % en poids de SiO₂,
- 10 à 45 % en poids de pigments réfractaires, notamment de TiO₂, notamment de taille micronique
- de préférence pas plus de 20 % en poids d'alumine et/ou d'oxyde de zinc.

Selon une caractéristique, l'émail présente la composition suivante :
- entre 20 et 60 % en poids de SiO₂,
- 10 à 45 % en poids de pigments réfractaires, notamment de TiO₂, notamment de taille micronique
- de préférence pas plus de 20 % en poids d'alumine et/ou d'oxyde de zinc.

Dans un exemple préféré, la composition est la suivante :
- entre 20 et 60 % en poids de SiO₂, de préférence de l'ordre de 45 %,
- 10 à 45% en poids de TiO₂, de préférence de l'ordre de 20 %
- pas plus de 10 % en poids de ZnO, de préférence de l'ordre de 5 %,
- pas plus de 10 % en poids de Al₂O₃, de préférence de l'ordre de 3 %,
- jusqu'à 30 % en poids d'un ou plusieurs oxydes, tels que 5 à 25 % de Na₂O, au plus 5% de K₂O et au plus 5 % de CaO.

De préférence, l'émail est déposé sur la première feuille de verre par sérigraphie et/ou par jet d'encre.

Les moyens diffusants peuvent être formés par un traitement superficiel de la première feuille de verre du type sablage, attaque acide,

On peut citer comme verre acidé, le verre Satinovo® de SAINT-GOBAIN GLASS

Les moyens d'extraction sont disposés aux endroits souhaités d'extraction de la lumière. Il est ainsi possible de dessiner le cheminement de la lumière sur la surface en la diffusant par le biais de surfaces diffusantes aux aires et contours bien définis, selon par exemple des motifs géométriques ou même de texte.

La surface totale des moyens d'extraction peut occuper par exemple moins de 50% de la surface totale, voire même 20% ou moins.

Lors que la couche diffusante est un aplat de préférence elle couvre partiellement la première feuille.

La diode peut être encapsulée, c'est-à-dire comprendre une puce semi-conductrice et une enveloppe, par exemple en résine type époxy ou PMMA, encapsulant la puce. Les fonctions de cette enveloppe peuvent être multiples : protection de l'oxydation et de l'humidité, élément diffusant ou de collimation, conversion de longueur d'onde. Les diodes peuvent être noyées dans une matière de protection commune (étanchéité à l'eau, aux poussières ...) qui est de préférence une colle fixant le profilé au panneau.

La diode peut être par exemple une puce semi-conductrice sans lentille de collimation par exemple de taille de l'ordre de la centaine de µm ou du mm ; et éventuellement avec une encapsulation minime par exemple de protection.

De préférence, les diodes peuvent ainsi être de simples puces ou avec une encapsulation à faible volume notamment de type SMD (« Surface Mount Device » en anglais) ou « Chip on Board » plutôt que les diodes classiques (de première génération) volumineuses et de faibles puissances et efficacité lumineuse.

La diode peut être choisie notamment parmi au moins l'une des diodes électroluminescentes suivantes :
- de préférence une diode dont la direction principale d'émission est perpendiculaire au support de diodes,
- ou une diode dont la direction principale d'émission est parallèle par rapport au support de diodes (configuration « side emitting »),

D'un point de vue dimensionnel, on peut prévoir l'une au moins des caractéristiques suivantes pour les diodes :
- les diodes sont de hauteur inférieure à 1 cm, voire à 5 mm,
- les diodes sont de largeur (diamètre) inférieure à 1 cm,
- les diodes sont identiques et régulièrement espacées les unes des autres,
- le nombre de diodes, sur un support PCB commun notamment, est au moins égal à 10.

Le ou les groupes de diodes peuvent être couplés à des moyens de pilotage permettant d'émettre de la lumière soit en permanence, soit par intermittence, avec différentes intensités, soit d'une couleur donnée, soit de différentes couleurs, notamment en fonction de la quantité de la lumière naturelle.

Et de préférence, pour un éclairage uniforme, les diodes sont choisies avec le même spectre, mono ou polychromatique.

Les diodes sont de préférence sur un support de diodes. Le support de diodes peut être de toute forme, par exemple plane, notamment une barrette par exemple rectiligne de section transversale carrée ou rectangulaire.

Avantageusement, les diodes peuvent être agencées sur un support qui est une carte de circuit imprimé, de préférence métallique, notamment solidarisé à un profilé conducteur thermique de type métal, le support étant de préférence fixé par collage au profilé à l'aide d'une colle ou d'un adhésif double-face thermiquement conducteur.

Le support peut être opaque car il peut être masqué par le profilé choisi opaque.

La carte de circuit imprimé ou PCB (pour « Printed Circuit Board » en anglais) est en matière plastique ou est métallique.

De manière avantageuse, en particulier pour les diodes de moyenne ou forte puissance, le support des diodes peut être rendu solidaire d'un conducteur thermique du type métallique, notamment en aluminium, cuivre ou acier inoxydable, de préférence formé par le profilé à diodes, ledit support intégrant des moyens de dissipation thermique et/ou étant associé à des moyens de dissipation thermique connectés au conducteur thermique.

Les moyens de dissipation thermique, intégrés et/ou associés au support des diodes peuvent être constitués par le matériau constitutif du support, du type métallique, ou par des surfaces métalliques intégrées au support, et éventuellement par des moyens de solidarisation du support audit conducteur thermique, notamment par le profilé à diodes, qui sont thermiquement conducteurs et faits d'un matériau isolant électrique, du type colle ou ruban adhésif thermiquement conducteur.

De préférence le support (PCB) de diodes est métallique et les diodes sont soudées sur des pistes qui sont isolées électriquement du matériau métallique. Le matériau métallique du support étant conducteur thermique, le support peut être directement plaqué contre un conducteur thermique pour obtenir la dissipation thermique.

La fixation du support (PCB) au profilé peut être réalisée par exemple par clipsage et/ou vissage. On peut intercaler un conducteur thermique (type graisse thermique, scotch thermique et/ou colle thermique ...) pour obtenir une meilleure dissipation thermique, et ce pour une meilleure efficacité lumineuse et pour la pérennité des diodes.

Le ruban adhésif présente l'avantage de fournir une épaisseur calibrée, permettant au support (PCB) d'être parfaitement plan et d'assurer aux diodes d'être toutes à égale distance du profilé. De plus, le ruban adhésif permet sa fixation préalable au support.

Un assemblage du support (PCB) des diodes via un adhésif double-face ou une colle durcissable (qui ne fournit pas une fixation immédiate) est préféré car il permet un positionnement relatif du support de faibles dimensions sur le profilé.

Avec un support de diodes (PCB) plastique, les diodes sont soudées sur des surfaces dissipatrices de chaleur (dites « thermal pad » en anglais) rapportées sur les deux faces opposées du support et au travers de son épaisseur. La fixation est réalisée nécessairement par un matériau isolant électrique de solidarisation conducteur thermique associé aux surfaces de dissipation thermiques. Le matériau de solidarisation conducteur thermique est par exemple de la colle ou du ruban adhésif double-face thermiquement conducteur, déjà cités.

En variante, la ou les supports PCB sont fixés par collage d'un adhésif thermiquement conducteur double-face sur une pièce formant interface plane, avantageusement métallique, elle-même fixée par collage sur le profilé tel qu'avec une colle durcissable pour ne pas fournir une solidarisation immédiate. Une telle fixation permet un positionnement relatif du support de faibles dimensions de manière précise sur la partie du profilé parallèle au verre de façade (pour des leds à émission latérale), en particulier dans le cas d'un profilé semi-fermé présentant un retour pour former un entourage.

La transmission lumineuse de la première feuille de verre de l'invention peut être supérieure ou égale à 80%, voire à 85% ou 90% en particulier lorsque la mesure est effectuée sous illuminant D65.

La première feuille de verre peut être en verre minéral clair voire extra-clair. Pour le verre extra-clair; on peut se référer à la demande WO04/025334 pour la composition d'un verre extra-clair. On peut choisir en particulier un verre silicosodocalcique avec moins de 0,05% de Fe III ou de Fe₂O₃. On peut choisir par exemple le verre Diamant® ou Diamant solaire® de SAINT-GOBAIN GLASS, le verre Albarino® de SAINT-GOBAIN GLASS (texturé ou lisse), le verre OptiWHITE® de Pilkington, le verre B270® de Schott.

Il peut s'agir à titre d'exemple, selon notamment le rendu esthétique ou l'effet optique souhaité et/ou la destination du panneau décoratif et lumineux de :
- verre de composition standard, tel que le verre Planilux® de la société SAINT-GOBAIN GLASS, de coloration légèrement verte,
- verre extra-clair sans coloration (neutre) tel que le verre Diamant® ou Diamant solaire® de la société SAINT-GOBAIN GLASS,
- verre trempé présentant une meilleure résistance mécanique.

D'autres détails et caractéristiques avantageuses de l'invention apparaissent à la lecture des exemples de panneaux vitrés lumineux à diodes selon l'invention illustrés par les figures suivantes :
- La figure 1 représente une vue en coupe du panneau lumineux à diodes électroluminescentes dans un premier mode de réalisation de l'invention avec un zoom sur la fixation des diodes,
- La figure 2 représente une vue en coupe du panneau lumineux à diodes électroluminescentes dans un deuxième mode de réalisation de l'invention,

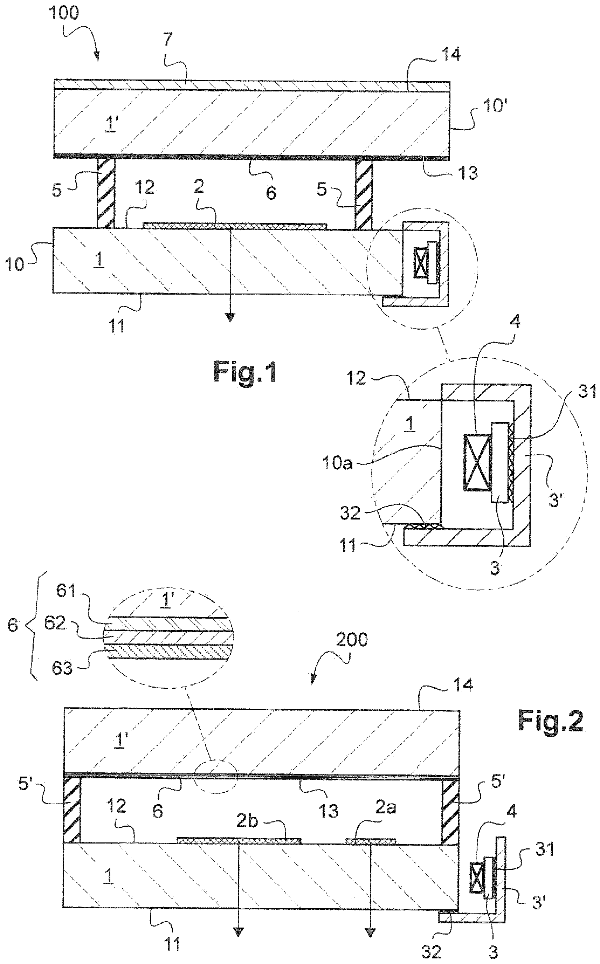

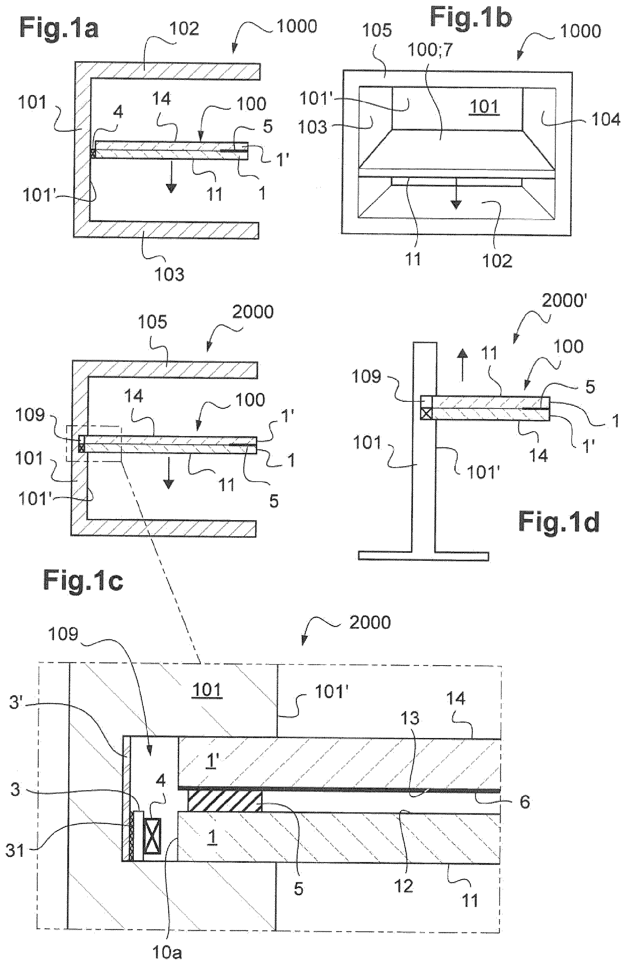

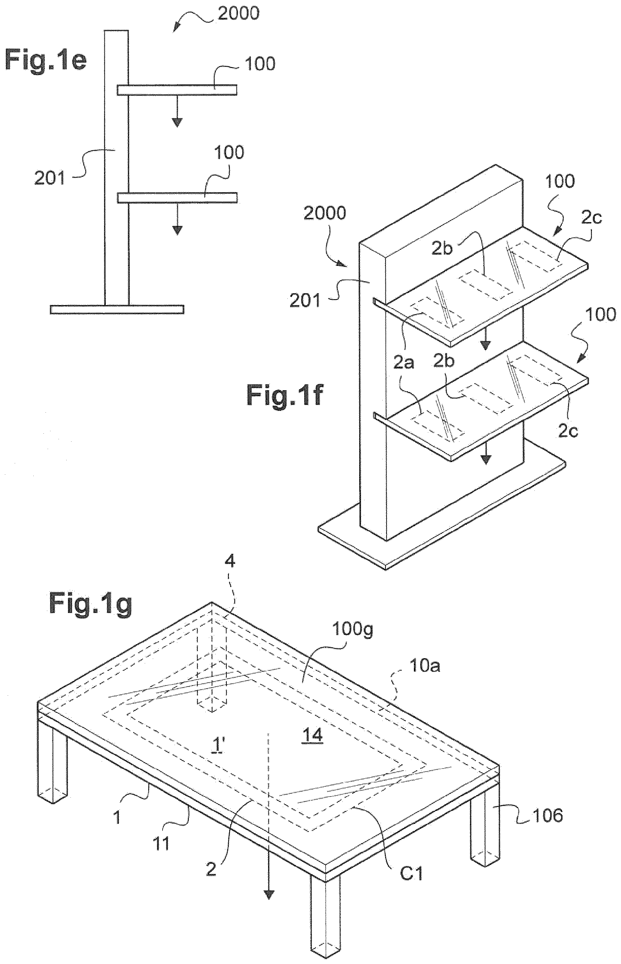

- La figure 1a représente une vue en coupe d'un meuble intégrant au moins un panneau lumineux à diodes électroluminescentes par exemple comme celui de la figure 1
- La figure 1b une vue en perspective de face d'un meuble intégrant au moins un panneau lumineux à diodes électroluminescentes par exemple comme celui de la figure 1a
- La figure 1c représente une vue en coupe d'un meuble intégrant au moins un panneau lumineux à diodes électroluminescentes par exemple comme celui de la figure 1,
- La figure 1d représente une vue en coupe d'un meuble intégrant au moins un panneau lumineux à diodes électroluminescentes par exemple comme celui de la figure 1
- La figure 1e représente une vue en coupe d'un meuble intégrant deux panneaux lumineux à diodes électroluminescentes par exemple comme celui de la figure 1
- La figure 1f représente une vue en élévation d'un meuble de la figure 1e
- La figure 1g représente une vue en élévation d'une table intégrant un panneau lumineux à diodes électroluminescentes par exemple comme celui de la figure 1

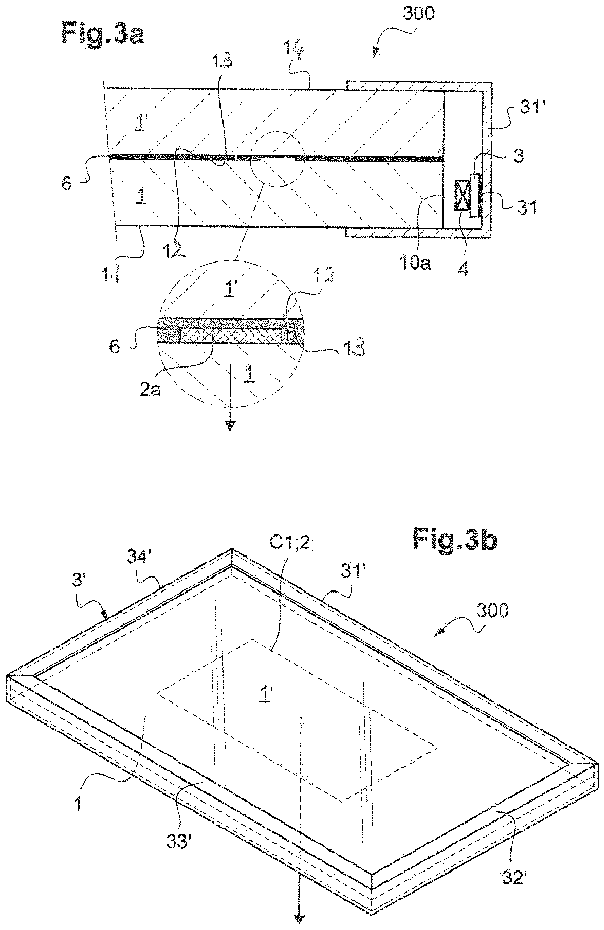

- La figure 3a représente une vue en coupe du panneau lumineux à diodes électroluminescentes dans un troisième mode de réalisation de l'invention avec un zoom sur la zone d'extraction
- La figure 3b représente une vue en élévation du panneau de la figure 3a

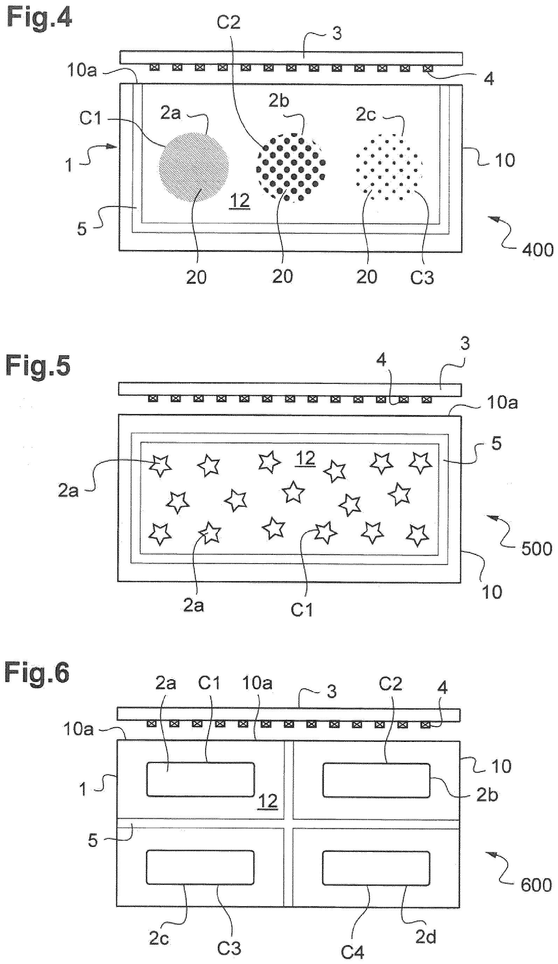

- La figure 4 représente une vue de face coté F2 d'un panneau lumineux à diodes électroluminescentes dans un quatrième mode de réalisation de l'invention
- La figure 5 représente une vue de face coté F2 d'un panneau lumineux à diodes électroluminescentes dans un cinquième mode de réalisation de l'invention
- La figure 6 représente une vue de face coté F4 d'un panneau lumineux à diodes électroluminescentes dans un sixième mode de réalisation de l'invention

Les figures sont schématiques et ne sont pas à l'échelle pour en faciliter la lecture.

La figure 1 représente une vue en coupe du panneau lumineux à diodes électroluminescentes 100 dans un premier mode de réalisation de l'invention avec un zoom sur la fixation des diodes.

Ce panneau 100 comporte d'abord :
- une première feuille 1 transparente en verre ou plastique, avec des faces principales opposée respectivement dites face F2 12 et face F1 11, et une première tranche 10,
- une deuxième feuille 1' transparente en verre ou plastique, avec des faces principales opposée respectivement dites face F3 13 et face F4 14, et une deuxième tranche 10' ou en variante une feuille opaque (bois métal, plastique teinté en masse).

Ces feuilles 1,1' sont assemblés par les faces internes F2 et F3 12,13 au moyen d'un adhésif périphérique 5 ici en retrait des tranches 10,10' d'au plus 30 mm et large d'au plus 15mm. Par exemple il s'agit d'une bande adhésive double face de préférence transparent par exemple un support polymérique transparent (polyester, PET, par exemple en mousse notamment de polyoléfine réticulée ou non etc) avec en double face de la colle acrylique (modifié par exemple) en particulier sensible à la pression comme le produit D9605 dénommé de la société NITTO, d'épaisseur 0,22 mm. Alternativement ce peut être un ruban adhésif sans support (ruban de transfert) par exemple composé d'un adhésif notamment acrylique sensible à la pression.

Les feuilles sont ici rectangulaires et planes (en variante bombées, selon les besoins) et de préférence en verre. La première feuille de verre 1 transparente est par exemple issue d'un verre dit clair tel que le verre PLANILUX® commercialisé par la société SAINT-GOBAIN GLASS, ou préférablement d'un verre dit extra-clair sous la dénomination DIAMANT® commercialisé par la société SAINT-GOBAIN GLASS. Il est en de même pour la deuxième feuille de verre. L'un des feuilles ou les deux feuilles peuvent être trempées thermiquement pour une meilleure résistance mécanique.

La deuxième feuille 1' est par exemple de 555mm par 355mm et d'épaisseur de 4mm.

La première feuille 1 est d'épaisseur de 3 à 4mm et est ici plus petite que la deuxième feuille, les chants sont alignés sauf pour une tranche dite de couplage 10a en retrait de la deuxième feuille.

Le panneau lumineux comporte un ensemble des diodes électroluminescentes 4 sur une carte de circuit imprimé dite PCB 3 couplées optiquement à la tranche de couplage 10a par exemple en regard et espacées d'au plus 5mm ou 1mm de la tranche ou même en contact. Les diodes émettent par exemple un blanc froid à 6000K. Par exemple on choisit 30 diodes alimentées à 12V 0,6 A.

Le support PCB 3 est fixé par une colle thermique par exemple la colle UV de MV760 de la société BOHL à un profilé 3' en aluminium de 0,5mm d'épaisseur de section en U : base en regard de la tranche de couplage 10a et deux retours, l'un coté face F3 de préférence ne s'étendant pas sur la face F2 et l'autre fixé par collage 32 à la face F1 11. Le profilé peut aussi être en L sans retour vers face F3.

La face F2 (ou en alternative F1) comporte une couche diffusante 2 pour l'extraction de la lumière visible du côté de la face F1. Par exemple il s'agit d'un aplat -ou d'un réseau de motifs ponctuels - d'émail blanc d'épaisseur 18µm en dépôt humide (dépôt par sérigraphie) avec un contour C1 rectangulaire.

La face F3 comporte une couche couvrante de masquage 6 sous forme d'un email noir couvrant la face F3.

La face F4 14 comporte un empilement partiellement réfléchissant 7 (dépôts par pulvérisation cathodique magnétron) qui utilise une couche en TiO₂ et une sous-couche en Si₃N₄ selon la séquence suivante Si₃N₄ (25 nm)/TiO₂(20 nm). Après dépôt des couches, le verre subit par exemple le traitement thermique suivant : chauffage à 620°C pendant 10 minutes. Alternativement, il y a avec une sur-couche en SiO₂ supplémentaire selon la séquence suivante : Si₃N₄ (20 nm) / TiO₂(20 nm) / SiO₂ (5 nm) le verre revêtu subit ensuite le même traitement thermique. Par ailleurs on peut rajouter une fine couche de TiO₂ d'au plus 5m.

Toutes les couches sont déposées de façon connue par pulvérisation cathodique assistée par champ magnétique : les couches en métal à partir de cible en métal en atmosphère oxydante pour le TiO₂ , les couches en nitrure de métal ou de silicium à partir de la cible de métal ou de silicium (dopé avec 8% en masse d'aluminium) adéquate dans une atmosphère réactive contenant de l'azote (100% N₂ pour le TiN, 40% Ar et 60% N₂ pour Si₃N₄). Les couches en Si₃N₄ contiennent donc un peu d'aluminium.

On peut réaliser une étape de cuisson pour l'émail et l'empilement et conduisant à un verre trempé

Cet empilement 7 procure un effet miroir en regard de l'émail noir.

Le panneau peut être utilisé notamment à l'horizontale, avec face F1 vers le bas ou vers le haut.

La figure 2 représente une vue en coupe du panneau lumineux à diodes électroluminescentes 200 dans un deuxième mode de réalisation de l'invention.

Cet exemple diffère du premier mode en ce que :
- l'adhésif 5' est affleurant des tranches, par exemple une colle UV
- sur la face F2 (ou F1) sont sérigraphiés deux ou même trois disques diffusants pour l'extraction (émail blanc) 2a à 2b de mêmes tailles
- le profilé 3' est en L.

En outre, la couche de masquage 6 est un empilement de trois couches (dans cet ordre à partir de la face F3
- une couche d'argent 61
- une couche de protection de l'argent (optionnelle) 62
- une couche diffusante blanche par exemple une encre, une peinture (dépôt par voie liquide qui augmente fortement la luminance en face F1.

Le panneau peut être utilisé notamment à l'horizontale, avec face F1 vers le bas ou vers le haut.

La figure 1a représente une vue en coupe d'un meuble 1000 intégrant au moins un panneau lumineux à diodes électroluminescentes 100 par exemple comme celui de la figure 1 avec la face F4 14 coté plafond et la figure 1b une vue en perspective de face de ce meuble.
Le meuble comporte une partie haute et basse 102,103, et une paroi de fond 101 avec une surface 101' contre le profilé avec les diodes 4.
Le meuble peut comprendre une ou plusieurs étagères lumineuses selon l'invention identiques ou avec des motifs lumineux distincts.

La figure 1b une vue en perspective de face d'un meuble 1000 intégrant au moins un panneau lumineux à diodes électroluminescentes par exemple comme celui de la figure 1a ou 2 ou 2' ou 3a.
Les surfaces hautes, basses, et latérales 102, 105,103, 104 et la surface du fond 101' sont par exemple blanches.
Le meuble peut comprendre une ou plusieurs étagères lumineuses selon l'invention identiques ou avec des motifs lumineux distincts.

La figure 1c représente une vue en coupe d'un meuble 2000 intégrant au moins un panneau lumineux à diodes électroluminescentes par exemple comme celui de la figure 1 avec un zoom sur le fond de meuble.

Il diffère du meuble de la figure 1a en ce que la paroi de fond du meuble comporte un retrait (une cavité, rainure dans la longueur par exemple de section en U) 109 de préférence retrait d'au moins 5mm ou mieux d'au 8mm pour masquer les points chauds. Une plaque en aluminium 3', ici une bande, rectangulaire est fixée dans le meuble (en particulier si paroi de fond non métallique) par exemple d'épaisseur 1mm. Le retrait peut masquer la bande adhésive 5 dans cette région. Les parois logeant le panneau 100 n'empêche pas le guidage. Il n'y a pas de contact optique.
Le support de diodes 3 avec les diodes 4 sont contre ou mieux fixées notamment par une colle thermique 31 à la plaque aluminium (pas de profilé en L ou U en plus rattaché au panneau 100). Elles sont espacées ou en contact avec la tranche de guidage 10a.
En variante la bande métallique additionnelle est sur le fond qui est dépourvu de retrait. En variante ou en plus, on peut avoir une ou deux séries de diodes contre ou fixées aux deux parois latérales par exemple de la même façon à une plaque métallique
Le meuble peut comprendre une ou plusieurs étagères lumineuses selon l'invention identiques ou avec des motifs lumineux distincts.

La figure 1d représente une vue en coupe d'un meuble 2000' intégrant un panneau lumineux à diodes électroluminescentes 100 par exemple comme celui de la figure 1.
Le meuble comporte juste un panneau vertical 101 sur un pied. Le panneau vertical peut avoir le retrait similaire à celui décrit en figure 1c. La lumière peut sortir par le haut pou par le bas suivant le placement du panneau.

La figure 1e représente une vue en coupe d'un meuble 2000 intégrant deux panneaux lumineux à diodes électroluminescentes par exemple comme celui de la figure 1.
Le meuble comporte juste un panneau vertical 201 sur un pied. Le panneau vertical peut avoir deux retraits chacun similaire à celui décrit en figure 1c.

La figure 1f représente une vue en élévation d'un meuble de la figure 1e. Par exemple il y a trois zones d'extractions 2a à 2c.

La figure 1g représente une vue en élévation d'une table intégrant un panneau lumineux à diodes électroluminescentes par exemple comme celui de la figure 1.
La table comporte comme plan de table le panneau 100g par exemple avec une zone d'extraction 2a en face F2 formant un cadre lumineux vers le sol.

La figure 3a représente une vue en coupe du panneau lumineux à diodes électroluminescentes 300 dans un troisième mode de réalisation de l'invention avec un zoom sur la zone d'extraction. La figure 3b représente une vue en élévation du panneau de la figure 3a.

Cet exemple 300 diffère du premier mode en ce que :
- les feuilles de verre 1,1' sont l'une contre l'autre (pas de collage entre les faces F2 et F3).
- les feuilles sont assemblés par un profilé de maintien par exemple métallique (alu, acier etc), le profilé de maintien est ici 4 pièces aboutées 31' à 34' de section en U qui forme un cadre de maintien par simple chaussage ou montage en force.

Bien sûr ou peut ajouter de la colle. L'une des pièces 31' loge les diodes 4 et le support de diodes 3.

En variante, le profilé est polymérique (PVC, PU) rigide, opaque, blanc, de couleur etc, et on ajoute une bande métallique (aluminium etc) entre le support de diodes 3 et le profilé pour la dissipation thermique.

Par exemple la zone d'extraction 2 en face F2 est rectangulaire de contour C1.

La figure 4 représente une vue de face coté F2 d'un panneau lumineux à diodes électroluminescentes 400 dans un quatrième mode de réalisation de l'invention.

L'adhésif d'assemblage 5 est sur trois côtés (trois bandes) et est absent du côté avec le couplage optique tranche 10a et diodes 4.

Il y a trois zones d'extraction 2a, 2b, 2c qui diffèrent entre elles soit par la répartition de la couche diffusante (réseau de motifs ponctuels 2b, 2c ou aplat 2a) ou en variante par la différence d'épaisseurs.

La figure 5 représente une vue de face coté F2 d'un panneau lumineux à diodes électroluminescentes 500 dans un cinquième mode de réalisation de l'invention. L'adhésif d'assemblage 5 est sur les quatre côtés, formant un cadre périphérique. Il y a une multitude des zones d'extraction 2a de contour C1 en étoile.

La figure 6 représente une vue de face coté F4 d'un panneau lumineux 600 à diodes électroluminescentes dans un sixième mode de réalisation de l'invention. L'adhésif d'assemblage 5 est en deux bandes croisées divisant en quatre la surface du panneau. Il y a quatre couches d'extraction 2a à 2d de contours C1 à C4 rectangulaires.

Bien entendu, la présente invention ne se limite pas à l'exemple illustré mais est susceptible de diverses variantes et modifications qui apparaîtront à l'homme de l'art.

## Revendications

1. Panneau vitré lumineux (100, 200, 300, 400, 500, 600) pour aménagement intérieur comportant :
- une première feuille transparente (1), en verre ou plastique, avec deux faces principales respectivement dites face F1 (11) et face F2 (12) et une première tranche (10),
- un ensemble de diodes électroluminescentes inorganiques (4) sur un support de diodes (3) couplées optiquement à la première feuille, la première feuille formant ainsi guide de lumière; les diodes ayant une émission principale dans le visible ou l'ultraviolet dit UV,
- des moyens d'extraction de lumière (2), aptes à extraire la lumière guidée dans la première feuille, lorsque la lumière extraite est UV des moyens de conversion en lumière visible, moyens d'extraction de lumière notamment comprenant sur la première feuille transparente une couche diffusante ou une texture diffusante ou dans la première feuille des marquages ou une région diffusante, moyens d'extraction de lumière définissant au moins une première zone d'extraction avec notamment un contour donné C1 et éventuellement une ou plusieurs deuxièmes zones d'extractions chacune avec un contour Ci donné,
**caractérisé en ce qu'**il comporte en outre :
- une deuxième feuille (1'), avec deux faces principales respectivement dites face F3 (13) et face F4 (14) et une deuxième tranche (10'), les faces F3 et F2 étant les faces internes en regard,
- la deuxième feuille est opaque ou est transparente, en verre ou plastique, et comporte une couche couvrante de masquage (6) sur la face F3 ou sur la face F4,
- les première et deuxième feuilles forment un ensemble vitré, étant assemblées :
a) par un adhésif local collant les faces F2 et F3, notamment de largeur d'au plus 20mm et/ou b) par un profilé de maintien sur la périphérie des faces F1 et F4 et en regard des première et deuxième tranches,
et les faces F2 et F3 sont en discontinuité optique, t espacées d'une hauteur H d'au plus 1mm, les faces F2 et F3 pouvant être l'une contre l'autre dans le cas b).

2. Panneau vitré lumineux (100, 200, 300, 400, 500, 600) selon la revendication 1 **caractérisé en ce que** selon a), l'adhésif, de préférence comportant ou constitué d'un ruban double face ou d'une colle, notamment de largeur d'au plus 15mm, de préférence sur au moins deux bordures périphériques opposées, est transparent.

3. Panneau vitré lumineux (100, 200, 300, 400, 500, 600) selon l'une des revendications précédentes **caractérisé en ce que** selon b) le profilé de maintien loge les diodes et le support de diodes, notamment le support de diodes est collé par une colle thermique au profilé de maintien qui est métallique ou sur une bande métallique additionnelle sur le profilé de maintien notamment polymérique, en particulier le profilé de maintien est en une ou plusieurs pièces aboutées forme un cadre de maintien.

4. Panneau vitré lumineux (100, 200, 300, 400, 500, 600) selon l'une des revendications précédentes **caractérisé en ce que** le support de diodes est collé par une colle thermique à une partie métallique d'une pièce ou un profilé polymérique avec une bande métallique additionnelle, la pièce est chaussée ou fixée à la première feuille et/ou la deuxième feuille, notamment forme ledit profilé de maintien selon b) ou est dissociée de l'ensemble vitré.

5. Panneau vitré lumineux (100, 200, 300, 400, 500, 600) selon l'une des revendications précédentes **caractérisé en ce que** la deuxième feuille opaque est une feuille en bois, en plastique teinté en masse .

6. Panneau vitré lumineux (100, 200, 300, 400, 500, 600) selon l'une des revendications précédentes **caractérisé en ce que** la couche couvrante de masquage de préférence sur la face F3 de la deuxième feuille transparente est une couche minérale notamment noire, de préférence est un émail et la deuxième feuille est en verre, en particulier un émail noir, foncé.

7. Panneau vitré lumineux (100, 200, 300, 400, 500, 600) selon l'une des revendications précédentes **caractérisé en ce que** la couche couvrante de masquage est sur la face F3 en particulier est une couche opaque diffusante notamment blanche.

8. Panneau vitré lumineux (100, 200, 300, 400, 500, 600) selon l'une des revendications précédentes **caractérisé en ce que** la couche couvrante de masquage est sur la face F3 et est une couche réfléchissante formant un miroir côté face F4, en particulier une couche à base d'argent, avec de préférence une surcouche opaque diffusante, notamment blanche, couvrant la couche couvrante de masquage, la couche opaque diffusante ayant une face libre vers la face F2.

9. Panneau vitré lumineux (100, 200, 300, 400, 500, 600) selon l'une des revendications précédentes **caractérisé en ce que** sur la face F3 de la deuxième feuille transparente, il comprend une couche opaque diffusante de préférence blanche couvrant et sur la couche couvrante de masquage, noire, foncée, la couche opaque diffusante ayant une face libre vers la face F2.

10. Panneau vitré lumineux (100, 200, 300, 400, 500, 600) selon l'une des revendications précédentes **caractérisé en ce que** la texture diffusante ou la couche diffusante d'extraction est sur la face F2.

11. Panneau vitré lumineux (100, 200, 300, 400, 500, 600) selon l'une des revendications précédentes **caractérisé en ce que** la couche diffusante est un aplat ou comporte un réseau de motifs diffusants en couche formant le contour C1.

12. Panneau vitré lumineux (100, 200, 300, 400, 500, 600) selon l'une des revendications précédentes **caractérisé en ce que** la couche diffusante est de préférence en face F2, dans la première zone d'extraction, la couche diffusante est d'épaisseur E1, et dans une deuxième zone d'extraction la couche diffusante est d'épaisseur E'1, E1 et E'1 sont différents, **en ce que** E1 - E'1 en valeur absolue est supérieure à 5 ou 8 µm et/ou E'1>1,5 E1 ou E1>1,5 E'1, la lumière extraite de la deuxième zone d'extraction sortant éventuellement vers la face F3 notamment dans une deuxième zone transparente de la deuxième feuille.

13. Panneau vitré lumineux (100, 200, 300, 400, 500, 600) selon l'une des revendications précédentes **caractérisé en ce qu'**il comprend une couche partiellement réfléchissante couvrant la face F4 de la deuxième feuille transparente, l'ensemble deuxième feuille avec ladite couche réfléchissante possède une réflexion lumineuse externe coté F4 d'au moins 60%, de préférence d'au moins 80%, la transmission lumineuse externe coté F4 étant nulle et **en ce que** la couche couvrante de masquage est une couche opaque en particulier noire, notamment distincte d'une couche miroir.

14. Panneau vitré lumineux selon l'une des revendications précédentes **caractérisé en ce que** la couche partiellement réfléchissante (7) couvrant la face F4 de la deuxième feuille transparente est un empilement de couches minces comportant une couche fonctionnelle à base d'un métal partiellement ou entièrement oxydé, ledit métal appartenant au groupe du titane, du zirconium notamment d'épaisseur de 5 à 50nm.

15. Panneau vitré lumineux selon l'une des revendications précédentes **caractérisé en ce qu'**il forme une tablette, une étagère, un plan de travail, un plan d'une table, une tablette de réfrigérateur.

16. Panneau vitré lumineux selon l'une des revendications précédentes **caractérisé en ce que** l'ensemble vitré illuminable est fourni avec des diodes sur le support de diodes dans le profilé de maintien lié à l'ensemble vitré , ou en kit avec les diodes sur le support de diodes ou est fourni séparément pour une utilisation dans une paroi de meuble ou murale porteur du support de diodes avec les diodes.

17. Paroi de meuble ou murale apte à intégrer le panneau vitré lumineux selon l'une des revendications précédentes.

18. Paroi de meuble, notamment fond de meuble, ou murale apte à intégrer le panneau vitré lumineux selon l'une des revendications précédentes de panneau **caractérisé en ce qu'**elle comporte un retrait apte à loger le support de diodes, les diodes notamment sur une bande métallique fixée sur la paroi et même une portion du panneau incluant la première tranche notamment de couplage optique.

19. Meuble comportant la paroi selon l'une des revendications 17 ou 18.
